(19)

Europäisches Patentamt
European Patent Office
Office européen des brevets

(11) **EP 1 918 719 A2**

(12) **EUROPEAN PATENT APPLICATION**

(43) Date of publication:
　　07.05.2008　Bulletin 2008/19

(51) Int Cl.:
　　*G01N 35/00* (2006.01)　　*B01L 3/00* (2006.01)

(21) Application number: **07021106.5**

(22) Date of filing: **29.10.2007**

(84) Designated Contracting States:
　　**AT BE BG CH CY CZ DE DK EE ES FI FR GB GR
　　HU IE IS IT LI LT LU LV MC MT NL PL PT RO SE
　　SI SK TR**
　　Designated Extension States:
　　**AL BA HR MK RS**

(30) Priority: **30.10.2006　JP　2006293483**

(71) Applicant: **Hitachi, Ltd.**
　　**Chiyoda-ku
　　Tokyo 100-8280 (JP)**

(72) Inventors:
　　• **Kajiyama, Tomoharu**
　　　**c/o Hitachi, Ltd.
　　　Intellectual Property Group
　　　Chiyoda-ku
　　　Tokyo 100-8220 (JP)**

　　• **Shirai, Masataka**
　　　**c/o Hitachi, Ltd.
　　　Intellectual Property Group
　　　Chiyoda-ku
　　　Tokyo 100-8220 (JP)**

　　• **Kambara, Hideki**
　　　**c/o Hitachi, Ltd.
　　　Intellectual Property Group
　　　Chiyoda-ku
　　　Tokyo 100-8220 (JP)**

(74) Representative: **Strehl Schübel-Hopf & Partner**
　　**Maximilianstrasse 54
　　80538 München (DE)**

(54) **System for analysis of gene sequence**

(57)　A conventional large-scale parallel pyrosequencing apparatus has the disadvantage that throughput decreases because much time and a large number of procedures are required for introduction of measurement beads, and analysis accuracy is deteriorated due to a reduction in accuracy of reagent replacement. There is provided an apparatus, wherein the apparatus includes a flow cell having a plurality of microfabricated reactors, and a camera opposed thereto, and DNA to be measured is fixed on the surfaces of beads having a specific gravity of 4 or greater, preferably zirconia beads. The flow cell is made horizontal when introducing the beads into the flow cell, and opposed to an optical axis of the camera when measuring an elongation reaction, the optical axis of the camera having a gradient with respect to the horizontal direction.

FIG.1

**Description**

Field of the Invention

The present invention relates to a kit, an apparatus and a system for use in analysis of a nucleic acid, and an apparatus for analyzing a base sequence of a gene, and more specifically to an apparatus enabling analysis of a gene sequence, analysis of gene polymorphism, analysis of gene mutation and analysis of gene expression.

Background of the Invention

Methods using gel electrophoresis and fluorescence detection are widely used for determination of a DNA base sequence. In this method, first, a large number of copies of a DNA fragment, the sequence of which is to be analyzed, are prepared. Fluorescence-labeled fragments of different lengths are prepared with the 5'end of DNA as a starting point. Fluorescence labels of different wavelengths are added according to base species of the 3'end of these DNA fragments. A difference in length is identified based on a difference by one base by gel electrophoresis, and luminescence generated by each fragment group is detected. The DNA end base species of a DNA fragment group being measured is known from the luminous wavelength color. Since DNA passes through a fluorescence detecting portion in ascending order with the shortest fragment group the first, the end base species can be known in ascending order with the shortest DNA the first by measuring the fluorescent color. The sequence is thereby determined. Such fluorescent DNA sequencers have come into widespread use and played a very active part in analysis of human genomes as well. For this method, a technique has been disclosed in which the number of analysis per sequencer is increased by using a large number of glass capillaries having an inner diameter of about 50 $\mu$m and further using a method such as end detection (for example, Anal. Chem. 2000, 72, 3423-3430).

On the other hand, the sequence determination method by stepwise chemical reactions (for example, WO 98/13523 and WO 98/28440), notably pyrosequencing, receives attention in terms of easy handling. The outline of this method is as follows. A primer is hybridized with a DNA strand as a target, and 4 complementary strand synthetic nucleic acid substrates (dATP, dCTP, dGTP, dTTP) are added in a reaction solution one by one to carry out a complementary strand synthesis reaction. When the complementary strand synthesis reaction occurs, the DNA complementary strand is elongated, and pyrophosphate (PPi) is produced as a byproduct. The pyrophosphate is converted into ATP by the action of coexisting enzyme, and reacted under coexistence of luciferin and luciferase to generate luminescence. By detecting the light, the added complementary strand synthetic substrate is found to have been captured in the DNA strand, and sequence information of the complementary strand, and hence sequence information of The DNA strand as a target is known.

This method can be applied to flow-through analysis, and a technique has been reported in which the method described above is applied to markedly increase the number of analysis (for example, Margulies M, et al., "Genome sequencing in microfabricated high-density picoliter reactors.", Nature, Vol. 437, Sep. 15; 2005, pp 376-80 and Supplementary Information s1-s3). This technique uses a flow-through cell having a plurality of microfabricated reactors on one surface. A plurality of molecules of the same kind with a primer hybridized with a target DNA strand are fixed on the surface of a Sepharose bead having a diameter of about 35 $\mu$m, and the bead and a bead on which an enzyme for bioluminescence (luciferase) or the like is fixed are filled in the microfabricated reactor in the flow cell. Microparticles having a diameter of 0.8 $\mu$m are filled so that the beads are not discharged. The filling of these beads is performed by introducing a bead-containing solution into the flow cell and causing the beads to sediment by a centrifuge. The analysis is performed by introducing 4 complementary strand synthetic nucleic acid substrates upstream of (dATP, dCTP, dGTP, dTTP) for an elongation reaction one by one from upstream of the flow cell and observing bioluminescence generated at this time. In these techniques, first, an anchor probe is fixed one end surface of an optical fiber plate, and bound to a circular nucleic acid template, and sequence determination and polymorphism analysis are carried out by bioluminescence (for example, WO 01/020039). Furthermore, using the optical fiber plate described above, a picotiter plate is prepared, and used for a part of the flow cell (for example, Electrophoresis 2003, 24, 3769-3777). Further, documents (for example, WO 03/004690) disclose a plate provided with a membrane or the like to reduce contaminations resulting from lateral diffusion of substances, specifically pyrophosphate and the like, produced in individual reaction wells in the picotiter plate.

An example of a reaction system different from the technique described previously is disclosed as a reagent applicable to the pyrosequencing reaction (for example, JP-A-09-234099). In this prior art, AMP and PPi are synthesized into ATP using a reverse reaction of enzyme pyruvate orthophosphate dikinase (PPDK), and the concentration of AMP is measured.

Brief Summary of the Invention

The pyrosequencing technique using a flow-through detector having a plurality of microfabricated reactors arranged side by side has a markedly high throughput performance as compared to conventional gel electrophoresis. However, the current serious problem is that the base length analyzable by the technique is short. Therefore, in this technique, it is one of important goals to increase the base length to be analyzed.

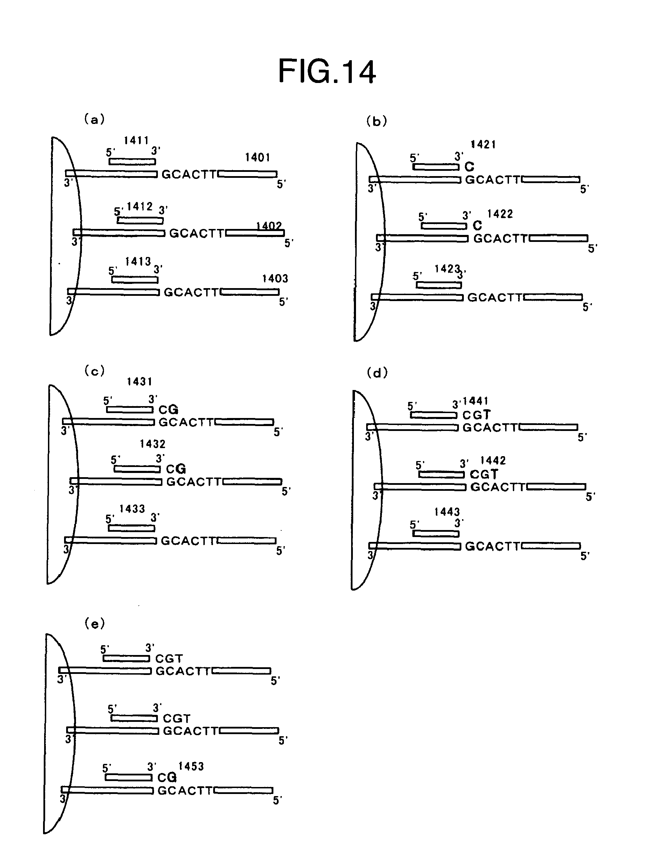

One of the reasons for limiting the analyzable base length lies in accuracy of a polymerase elongation reaction. As described previously, this technique is a method in which 4 bases are elongated one by one by the polymerase elongation reaction and base sequence information is obtained according to occurrence/nonoccurrence of the elongation reaction. In this case, accuracy of the elongation reaction depends on the probability that a reagent component introduced as a material for elongation arrives at the inside of the microfabricated reactor, and the amount of previous reagent component remaining at the time of subsequent introduction of another reagent. A specific example will be described using Figs. 14(A) to 14(E). First, assume that measurement object DNAs 1401 to 1403 of the same kind are fixed on a bead in a state of complementary binding to primers 1411 to 1413 (Fig. 14(A)). In this figure, only three molecules are shown for the sake of simplification. Analysis with elongation is started from the 3'side end of the primer, but it is readily appreciated that elongation is caused by "dCTP" in this example. Here, assume that elongation substrates are introduced in the order of C

$\rightarrow$ G $\rightarrow$ T $\rightarrow$ A $\rightarrow$ C(repeated cycles) . First, a reagent having as a main component dCTP complementary to base G is introduced, and occurrence/nonoccurrence of the elongation reaction is analyzed. In that case, base C is generally added to the 3'end of the primer like molecules 1421 and 1422. However, if the supply of dCTP is insufficient, there are incompletely elongated molecules like molecule 1423. Thereafter, the introduced dCTP component is discharged using an appropriate washing reagent, and a reagent having dGTP as a main component is then introduced as a next reagent. In that case, normally elongated molecules 1431 and 1432 can capture next base G, but unelongated molecule 1433 can not be elongated. Thereafter, elongation occurs at base T, and elongation does not occur at base A (Fig. 14(D)). As a result, correctly elongated molecules are like molecules 1441 and 1442. However, initially unelongated molecules are like molecule 1443. In reality, some of molecules on the bead are unelongated, resulting in a state in which molecules 1441 and 1443 are mixed. Next, when dCTP is injected again, elongation will not occur in principle. However, unelongated molecule 1453 is elongated. Consequently, the analyzer determines that the fourth base is base G as false sequence information, "GCAG". This is called a false signal component caused by a phase shift of elongation.

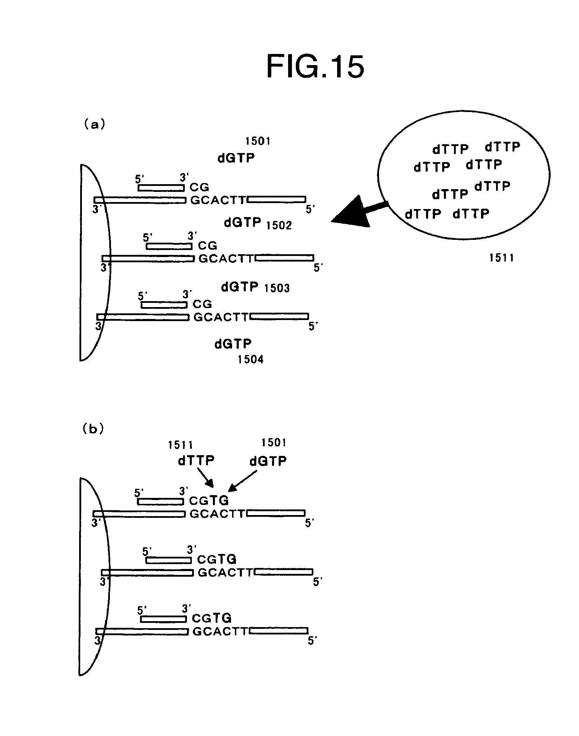

If washing between introductions of reagents is insufficient, excessive elongation originated from residual components occurs. A case will be discussed where the sequence is determined to be C $\rightarrow$ G $\rightarrow$ T (Fig. 15(A)) as in the case described above. If previously introduced dGTPs 1501 to 1504 remain in part when dTTP 1511 is introduced, elongation may occur in an amount equivalent to 2 bases, namely bases T and G, as an elongation reaction. Such a case is called excessive elongation. In this case, elongation, which is unlikely, occurs in an amount equivalent to 2 bases at next base A. Consequently, the analyzer determines that the fourth and fifth bases are base T as false sequence information, "GCATT".

Both the cases become a factor of generating a false elongation signal in subsequent analysis, making it difficult to discriminate between false elongation and real elongation. In the prior art, components likely remain due to insufficient reagent introduction and incomplete washing, and false signals are thus likely increased, since microparticles, a membrane and the like are used when beads are filled.

In the prior art, a centrifuge is used when beads are introduced into microfabricated reactors, but as a result, time required for measurement and the number of procedures are increased, resulting in reduction of measurement throughput. Therefore, means for filling sample fixing beads simply and rapidly is required.

As described above, it has been required to overcome the above problems for realization of a large-scale parallel base sequence analysis apparatus having high analysis throughput, achieving accurate introduction of reagents and reduction of residual reagents by washing, and allowing an analyzable base length to be increased.

Other objects, features and advantages of the invention will become apparent from the following description of the embodiments of the invention taken in conjunction with the accompanying drawings.

Brief Description of the Drawings

Fig. 1 is a view of the configuration of an apparatus;
Fig. 2 is a schematic diagram of a flow cell;

Figs. 3(A) to 3(C) are explanatory views of a sample fixing bead;

Fig. 4 is a view for explaining a flow at measurement;

Figs. 5(A) and 5(B) show an example of a microfabricated reactor in a flow cell;

Fig. 6 is a view for explaining a mechanism in which a bead sediments into the reactor;

Fig. 7 shows a specific gravity versus an available flow rate range;

Fig. 8 shows an arrangement of microfabricated reactors;

Fig. 9 shows an arrangement of microfabricated reactors;

Fig. 10 shows an arrangement of microfabricated reactors;

Fig. 11 shows an arrangement of microfabricated reactors;

Fig. 12 is a view for explaining a reaction mechanism of pyrosequencing;

Fig. 13 shows a measured bioluminescent image (result of experiments);

Figs. 14(A) to 14(E) are views for explaining a nonelongation phenomenon as a problem;

Figs. 15(A) and 15(B) are views for explaining an excessive elongation phenomenon as a problem;

Fig. 16 is a view of the configuration of an apparatus using a reflection plate in an optical path;

Fig. 17 is an explanatory view of a mechanism of controlling the gradient of the flow cell;

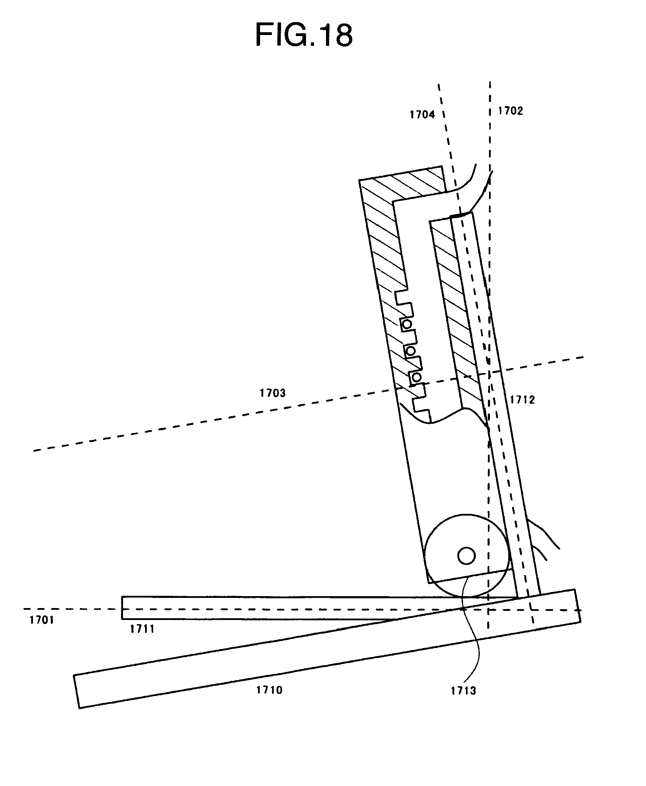

Fig. 18 is an explanatory view of the mechanism of controlling gradient of the flow cell; and

Fig. 19 is an explanatory view of the mechanism of controlling gradient of the flow cell.

Detailed Description of the Invention

Solving the problems described above requires a technique for "automatically" inserting sample fixing beads into microfabricated reactors and a technique for preventing beads from being easily discharged during introduction of a reagent. We conceived use of beads having a high specific gravity as measures against the problems. Most of beads which have been used in biological fields have a specific gravity less than 4. Particularly, for the sepharose bead in the prior art described above, the specific gravity is only slightly greater than 1, which is almost same as that of a surrounding solution, and therefore beads are easily discharged against the intention to fix them on predetermined regions. Accordingly, it is required to pack the beads with microparticles and the like, thus causing the problem of incomplete reagent introduction and incompleteness during replacement of the reagent. As described in examples, a bead having a specific gravity of 4 or greater is easily captured in the microfabricated reactor due to its self weight. Particularly, a zirconia bead having a specific gravity of 6 or greater has good corrosion resistance and strength, and is easy to handle. Due to its self weight, the bead can be easily captured in the reactor simply by introducing it from outside into the flow cell. For automatically capturing the bead in the reactor, particularly its gravity may be used. In this case, it is necessary to place the opening of the reactor to face substantially upward in the vertical direction when the reagent is made to flow horizontally. This is suitable for capturing the bead, but if air bubbles are trapped in the flow cell, they may remain there. If air bubbles are trapped, subsequent measurements will be affected. In the embodiment of the present invention, it is necessary to introduce 4 substrate reagents and reagents for washing them into the flow cell on be one, and use of "air gaps" between those reagents in a passage for introduction is effective. Use of "air gaps" avoids mixture of preceding and succeeding reagents, thus making it possible to replace the reagent accurately. Use of "air gaps" actively introduces air bubbles into the flow cell, but it is difficult to discharge air bubbles. For discharging air bubbles, it is effective to make the reagent flow upward in the vertical direction. At this time, the problem can be solved by making the angle of the flow cell variable beforehand and shifting from verticality the angle of the flow of the reagent during reaction measurement. Owing to this configuration, the bead can be prevented from falling off the reactor even if the reagent is made to flow upward in the vertical direction. Particularly, a shift by about 5 to 30 degrees is suitable for achieving both the purposes of discharge of air bubbles and holding of the bead.

In the present invention, zirconia particles are used as an example of the bead having a specific gravity of 4 or greater, for example, a specific gravity of 6. The zirconia particles may be made of zirconium dioxide ($ZrO_2$) or strengthened by adding yttrium oxide to zirconium oxide.

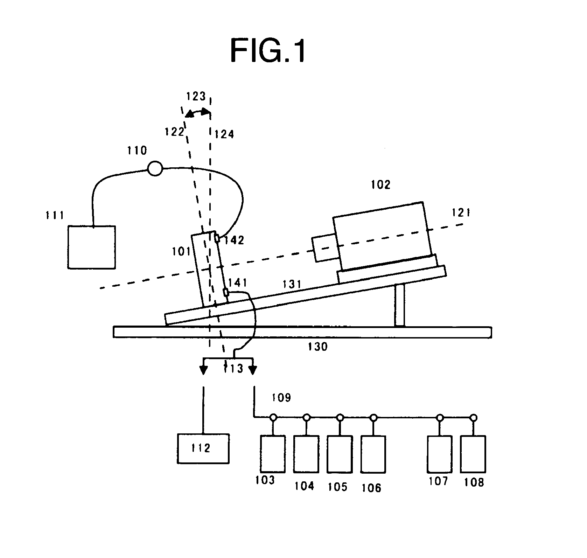

The present invention will be described with examples. Here, a sequence of a gene to be measured is determined using the principle of the pyrosequencing method. An example of the configuration of an apparatus of this example is shown in Fig. 1. The apparatus of this example comprises a flow-through cell (flow cell) 101, a two-dimensional imaging device 102 as a detection portion of a cooled CCD camera which detects a luminescent image, reagent tanks 103 to 106 storing 4 nucleic acid substrates (for example, dATP, dGTP, dCTP, dTTP), respectively, for dispensing the substrates one by one, a washing reagent tank 107 storing a washing reagent for washing the inside of the flow cell after elongation reaction measurement, a conditioning reagent tank 108 storing a conditioning reagent for washing out residual washing reagent components in the cell after washing, an injection portion (selection valve 109, pump 110 for handling the reagent) for selectively injecting the reagents to the flow cell side, a waste liquid bottle 111, and the like. The bead having a sample (measurement object nucleic acid) fixed on the surface is stored in a bead tank 112 in a state of being stirred in a liquid. The system has an introduction switching mechanism 113 switching between bead introduction and reagent introduction.

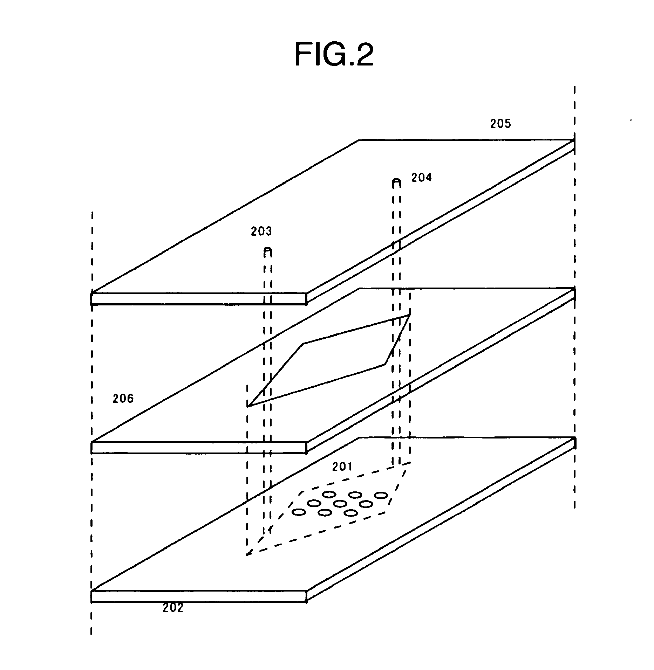

An example of the structure of the flow cell described above will now be described. Fig. 2 is a development view of the flow cell. The flow cell comprises a base plate 202 having a plurality of microfabricated rectors (recessed portions) 201 on the surface for holding the sample fixing bead described later, an upper plate 205 having a reagent inlet 203, a reagent outlet 204 and a sample loading port (not shown) that is provided as required, and a spacer 206 forming a passage.

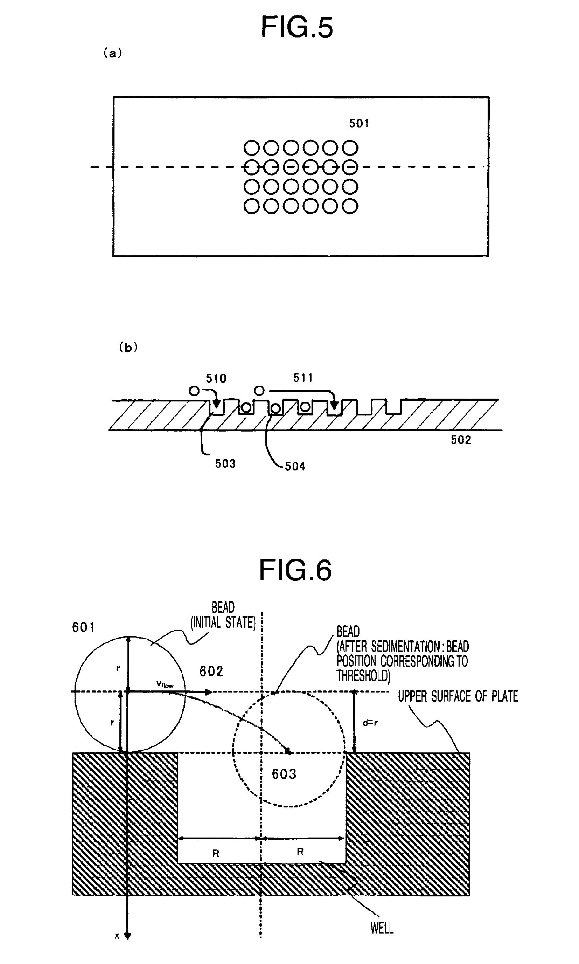

One example of the base plate is shown in Figs. 5(A) and 5(B). The base plate has a plurality of microfabricated reactors 501 at the central part. Fig. 5(B) is a sectional view of the dashed line part. The microfabricated reactor 501 may have, for example, a cylindrical shape. The shape is selected according to the material of the base plate and the method of fabrication. We examined an example of fabricating the base plate by cutting processing using a stainless material, an example of fabricating the base plate by a mask and wet etching using a silicon wafer, an example of fabricating the base plate bluster processing with particles using a glass such as a slide glass, and an example of fabricating the base plate by injection molding with a mold using polycarbonate, polypropylene, polyethylene and the like. This example does not limit the material and the method of fabrication for use in the present invention.

To get back to the explanations of the configuration of the apparatus in Fig. 1, the flow cell described above is placed such that the photographing surface of the two-dimensional imaging device 102 provides a region where the microfabricated reactors of the flow cell are distributed. A dashed line 121 shows an optical axis with regard to photographing of the two-dimensional imaging device 102, namely a normal line passing through the center of the imaging surface of the imaging device and substantially perpendicular to the imaging surface. A dashed line 122 shows a base surface of the flow cell. The base surface is the surface of an image photographed by the imaging device. A dashed line 124 shows a vertical line passing the intersection of a line 121 and a plane 122. Here, an angle 123 shows a gradient of the base surface of the flow cell with respect to the vertical direction. This angle means a gradient of the optical axis 121 with respect to the flat surface. In this figure, reference numeral 130 denotes a flat board and reference numeral 131 denotes placed parallel to the optical axis. Therefore, the angle which the board 130 forms with the board 131 is also the angle 123. A reagent inlet 141 and a reagent outlet 142 of the flow cell are each provided in the flow cell as shown in the figure, and as for their positional relationship, the reagent inlet 141 is situated at a lower position and the reagent outlet 142 is situated at an upper position in the vertical direction. Therefore, the reagent flows upward in the vertical direction. This arrangement is effective for efficiently discharging air bubbles flowing into the cell together with the reagent.

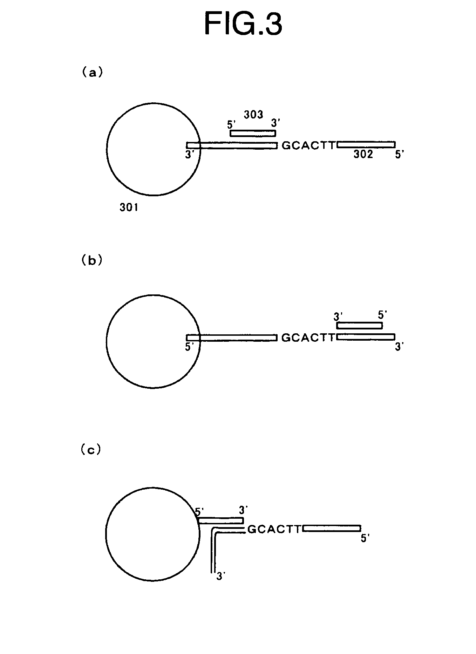

The sample fixing bead to be measured by the apparatus will be described. Figs. 3(A), 3(B) and 3(C) show an example of the sample fixing bead. For the bead, for example, a zirconia bead having a specific gravity of about 6 is used as a bead 301. Here, the specific gravity refers to a specific gravity to water. The zirconia bead is often described as zirconium dioxide ($ZrO_2$) for its material, but its general example is a substance strengthened by adding yttrium oxide and the like to zirconium oxide. Its specific gravity varies depending on production steps and mixing ratios, but is commonly 5.5 to 6. The material of the bead may be zirconium dioxide or may be a substance prepared by adding yttrium oxide and the like to zirconium oxide. The latter is most suitable for use in the apparatus, since it has excellent corrosion resistance to the reagent and a high specific gravity. However, use of a bead having a specific gravity of 4 or greater is effective. Its reason and effect will be described later.

On the surface of the bead are fixed a plurality of molecules in which single-strand DNA 302 to be measured and a primer 303 as a sequence analysis starting position are complementarily bound. In Figs. 3(A), 3(B) and 3(C), only one pair is shown for the sake of simplification. Here, molecules fixed on the surface of one bead should be of one kind, namely the same kind. The method for amplifying a plurality of molecules of the same kind on the surface of one bead may be, for example, the "emulsion PCR" which has been publicly known (for example, Margulies M, et al., "Genome sequencing in microfabricated high-density picoliter reactors.", Nature, Vol. 437, Sep. 15; 2005, pp 376-80 and Supplementary Information s1-s3). As shown in the figure, the processes thereof that may be used include a process in which DNA to be measured is fixed on the surface of the bead, or fixed after amplification, and the primer is complementarily bound thereto (Fig. 3(B)); and a process in which the primer is fixed on the surface of the bead, and DNA to be measured is complementarily bound thereto (Fig. 3(C)). In this example, experiments were conducted for the diameter of about 20 to 100 $\mu$m as a diameter of the bead, and the effect was evaluated. A difference in the diameter of the bead becomes a difference in the surface area, and leads to a difference in the number of molecules fixed on the surface of one bead, namely a difference in the measurement sensitivity described later, but when an electron multiplying cooled CCD as a camera, measurement is possible for all the cases described above. However, it is necessary to select the diameter and depth of the microfabricated reactor of the flow cell according to the size of the bead used. The suitable diameter and depth of the microfabricated reactor are about 1.2 to 1.5 times as large as the size of the bead used. Namely, when a bead having a size of about 50 $\mu$m is used, the suitable diameter and depth are about 60 to 70 $\mu$m. This is a suitable condition that can satisfy the requirement that the number of beads which can be placed in one reactor should be only one.

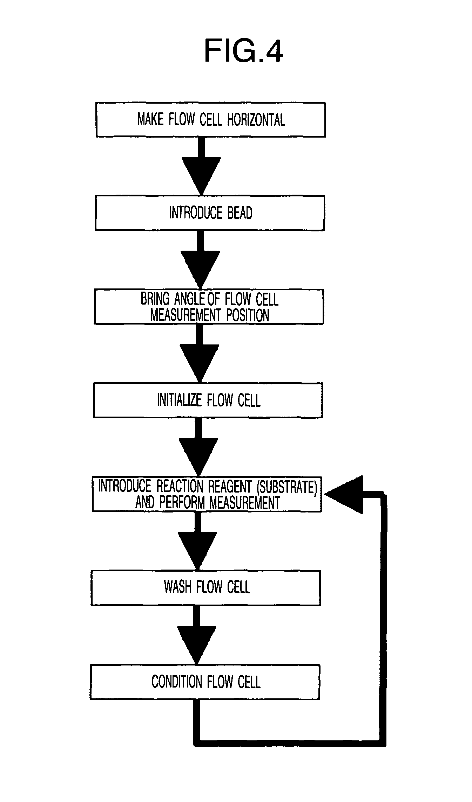

The flow of the analysis procedure of this example is shown in Fig. 4. In this example, beads each having sets of measurement object DNA and a primer fixed on the surface by some method are prepared beforehand. The analysis procedure is as follows.

(1) Introduction of beads

Zirconia beads on which a measurement object is fixed are introduced into microfabricated reactors of the flow cell. In this case, it is effective to make the angle of the flow cell variable to have a horizontal or nearly horizontal angle during introduction of the bead. Namely, the angle of the base surface of the flow cell to vertical direction is made variable to have an angle substantially parallel or nearly parallel to the horizontal direction during introduction of the bead. Figs. 5(A) and 5(B) illustrate the inside of the flow cell during introduction of the bead. Reference numeral 502 denotes a cross section of the base plate of the flow cell, and reference numerals 503 and 504 denote the microfabricated reactor. Arrows 510 and 511 show the flow of a sample solution containing beads. Beads come from the upstream, enter microfabricated reactors as shown by the flow 510, and captured. Once captured, the bead is not discharged from the reactor, since it has a specific gravity greater than that of the sample solution. The reactor, which has captured one bead, cannot capture a bead any more. Therefore, other beads flow to other reactors which have not captured a bead, where they are captured as shown by, for example, the flow 511. In this figure, the sample solution flows from the left to the right, but in reality, the solution is made to flow to and fro so that the beads are captured in the reactors to increase a capture rate. The mechanism in which the bead is captured in the reactor can be easily described with the self weight and buoyancy of the bead, and the viscous force of the solution involved during sedimentation. The relationship thereof is as follows. Fig. 6 is a view for explaining conditions when the bead is captured in the reactor and when the bead flows without being captured. When a bead at a position 601 flows in a direction of an arrow 602, sedimentation is started at the opening of the reactor to bring the bead to a position 603. At this time, if the bead sediments to the extent that its center is below the opening as shown in the figure, the bead is captured, and if the bead does not sediment to such an extent, the bead falls off the opening of the reactor. Thus, the condition for the bead to be captured can be roughly determined by the diameter of the opening, the specific gravity and diameter of the bead and the flow rate. For finding the condition, calculation was carried out in accordance with the following assumption. Preconditions for this theoretical calculation will be described below. As shown in Fig. 6, the bead travels at a constant velocity ($v_{flow}$) almost in contact with the upper surface of the plate, since its specific gravity is greater than that of the solution. The velocity is proportional to the flow rate within the flow cell. After the center of gravity of the bead arrives at the edge of the well (601 of Fig. 6), sedimentation is started by gravity, and when the sedimentation distance (d) becomes equal to or greater than the radius (r) of the bead, the bead 603 is filled in the well. Now, assume that the specific gravity of the bead is $\sigma$, the specific gravity of the solution is $\rho = 1$, the volume of the bead is V, the radius of the bead is r, the rate of resistance received by the bead in the solution is f, the gravitational acceleration is g, the center of gravity of the bead when the bead contacts the upper surface of the plate is an origin, and the position of the bead is represented by the position of the center of gravity of the bead with the x axis extending along a vertically downward direction with respect to the plate. Since the bead receives gravity, buoyancy and resistance, the equation of motion for the bead can be expressed by [Formula 1]:

[Formula 1]

$$\ddot{x} = \frac{\sigma - 1}{\sigma} g - \frac{f}{\sigma V} \dot{x}$$

wherein [Formula 2] and [Formula 3] represent single and double derivatives of x for time t.

[Formula 2]

$$\dot{x}$$

[Formula 3]

$$\ddot{x}$$

When this differential equation is solved under the initial condition at t = 0, [Formula 4] (1) is obtained.

[Formula 4]

$$x = \frac{\sigma-1}{\sigma} g\left\{\frac{\sigma V}{f}t - \left(\frac{\sigma V}{f}\right)^2\left(1-\exp\left(-\frac{f}{\sigma V}t\right)\right)\right\}$$

Furthermore, the resistance rate f is expressed by [Formula 5] (2) from the Stokes equation, where η is the viscosity of the solution.

[Formula 5]

$$f = 6\pi r \eta$$

Next, as shown by the dotted line of Fig. 6, the bead must sediment over the distance r or longer in [Formula 6] (3) for the bead to be filled in the well.

[Formula 6]

$$T = \frac{(2R-r)}{v_{flow}}$$

The condition for this is [Formula 7] (4).

[Formula 7]

$$r \le \frac{\sigma-1}{\sigma} g\left\{\frac{\sigma V}{f}T - \left(\frac{\sigma V}{f}\right)^2\left(1-\exp\left(-\frac{f}{\sigma V}T\right)\right)\right\}$$

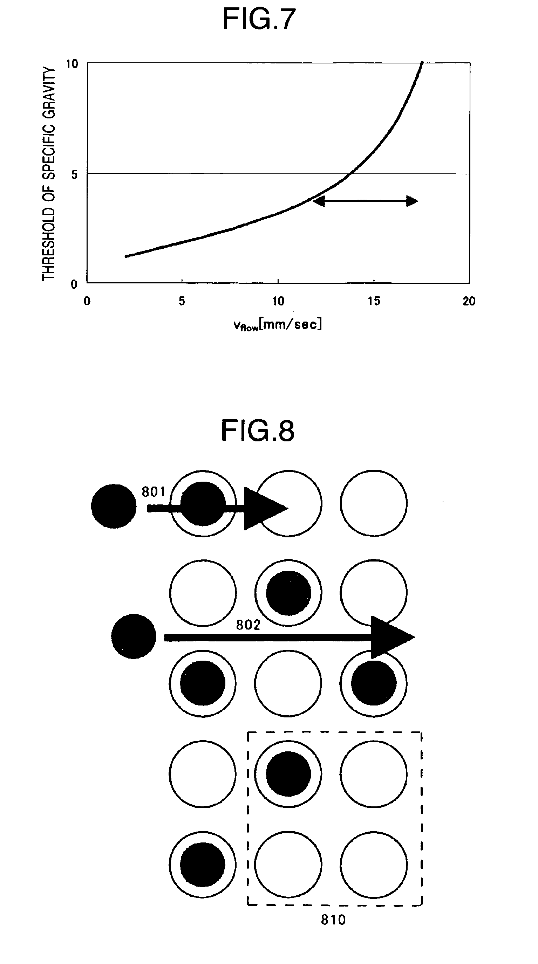

Here, formulae (3) and (2) and V expressed by [Formula 8] are substituted into the equation of formula (4), and into the resulting equation were substituted r = 30 $\mu$m, R = 40 $\mu$m, g = 9.8 msec$^{-2}$ and η (viscosity of water at 40°C) expressed by [Formula 9] to obtain a relationship between a threshold of the specific gravity and $v_{flow}$ shown in Fig. 7.

[Formula 8]

$$V = \frac{4}{3}\pi r^3$$

[Formula 9]

$$\eta = 6.5 \times 10^{-4} Pa \cdot \sec$$

As a result, the following findings are derived. First, for increasing the flow rate of the sample, the greater the specific gravity, the better. Up to the specific gravity of about 4, the upper limit of the flow rate increases as the specific gravity increases. For increasing the capture rate of beads in the flow cell, a higher flow rate is more effective within the upper limit of the flow rate. This is because if as the flow rate increases, the movement of the bead per unit time becomes larger to increase the probability of encountering the reactor. However, as apparent from this figure, when the specific gravity is 4 or greater, the upper limit of the flow rate cannot be expected to significantly increase as the specific gravity increases. Thus, for the bead having a specific gravity of 4 or greater, the capture rate is not increased. Therefore, if beads having a specific gravity of 4 or greater are used, there arises no difference in the capture rate. As a result, use of beads having a specific gravity of 4 or greater is suitable in terms of the capture rate.

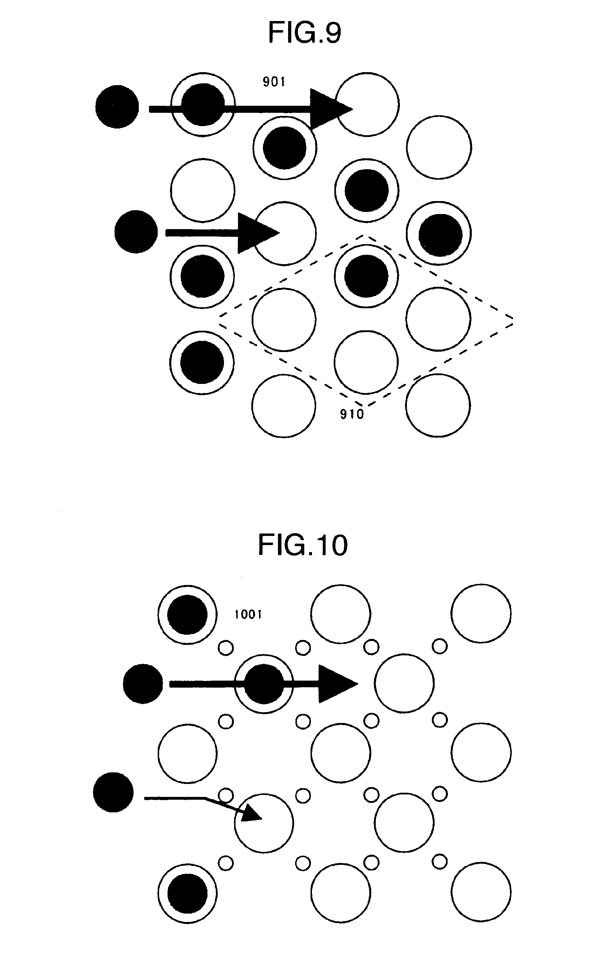

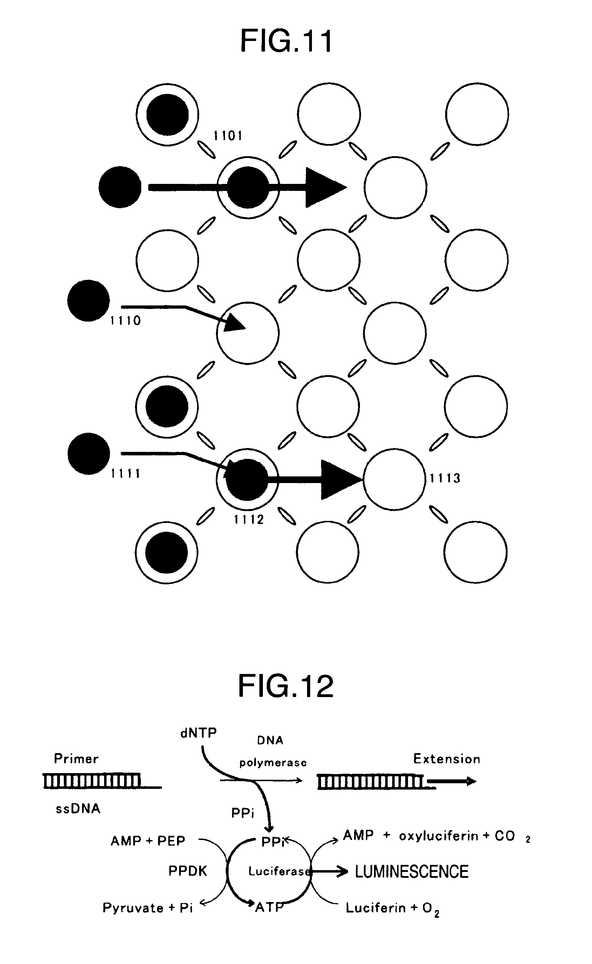

Some examples of improving the capture rate of beads will now be described. The capture rate can be improved by increasing the probability that beads encounter microfabricated reactors when the beads flow on the surface of the base plate of the flow cell. For example, Fig. 8 shows microfabricated reactors being two-dimensionally arranged, wherein the reactors are arranged in the lattice form in which the smallest unit of arranged lattices that includes 4 microfabricated reactors is a square or a rectangle 810. This may be a form of arrangement in which microfabricated reactors are arranged so as to form a plurality of lines in the long axis direction of the flow cell such that the center point on the surface of the opening of each microfabricated reactor of a plurality of adjacent lines is not situated on a straight line in the short axis direction substantially orthogonally crossing the long axis direction of the flow cell. As shown by the path of the arrow 801, beads contacting the corner of the square or a rectangle as the smallest unit of lattices can abundantly encounter the reactors placed on the extension of the path, but as shown by the path of the arrow 802, beads that do not contact the corner of the square or rectangle as the smallest unit of lattices cannot encounter the reactors. Methods for improving this situation include increasing the distribution density of the reactors as a simple method. However, if the distance between adjacent microfabricated reactors is short, there may be contamination of luminescent components among the reactors, and it is therefore important to increase the efficiency of crossing between the beads and the reactors while maintaining the distance. For example, the reactors are distributed aslant with respect to the flow direction 901 of the sample solution as in Fig. 9. At this time, microfabricated reactors are two-dimensionally arranged, wherein the smallest unit of arranged lattices that includes 4 microfabricated reactors is a rhombus 910 which is not rectangular. In this case, the probability that the beads encounter the reactors can be further improved to increase the capture rate of the beads while maintaining the distance between the reactors. It is also effective to provide between the reactors projections 1001 which change the direction of the flow of beads as in Fig. 10. Fabrication of the projection can easily be achieved in injection molding with a mold using a resin material. The shape of the projection may be simply a dot as shown in Fig. 10, but it is more effective to place the projection substantially at the position of the side of the rhombus not rectangular, which is the smallest unit of arranged lattices of the reactors distributed aslant as shown in Fig. 11, or place the projection substantially parallel to the side of the rhombus (1101). Particularly, in this example, the projection 1101 is situated on a line linking the reactors. As a result, a bead 1110 that has traveled through midpoints between the reactors travels along the projection when encountering the projection, and is therefore guided to the reactor on the extension. Even if the reactor to which the bead 1110 guided in the same manner is to be guided has been already occupied by another bead (1112), the guided bead is guided on a flow where the reactors exist, and can therefore encounter a vacant reactor (1113 in this figure) existing on the extension of the flow. Therefore, the capture rate of beads is markedly improved. A comparable effect can be obtained by providing the above-described projective structure on the passage side of the upper plate facing the base plate of the flow cell, rather than the base plate side.

According to the examples described above, the capture of sample fixing beads into microfabricated reactors in the flow cell can be achieved by merely control of a sample solution. This is effective for automatization of the apparatus, and considerably contributes to an improvement in analysis throughput.

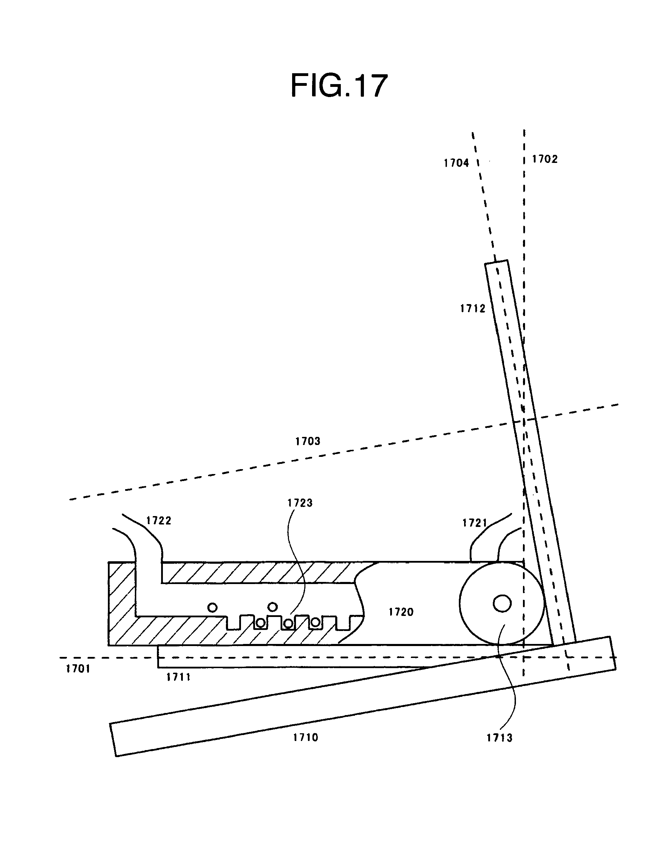

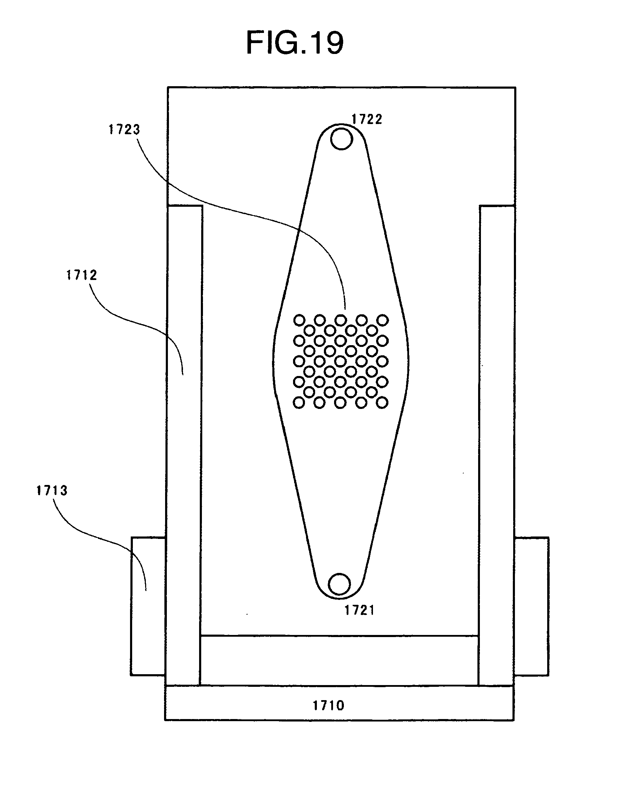

This apparatus is characterized by changing the gradient of the flow cell between the time of introduction of beads and the time of reaction measurement described later. Owing to this characteristic, air bubbles trapped in the flow cell one by one are efficiently discharged from the reagent outlet to prevent a situation in which observation of a reaction phenomenon, namely bioluminescence is adversely affected. Furthermore, the flow cell is configured so as not to be perpendicular with respect to the vertical direction. The reason for this is that the bead in the reactor is prevented from being discharged or falling down during measurement. When the angle of the flow cell is variable, reproducibility of the angle is important. Particularly, the surface of the flow cell during measurement is required to be substantially perpendicular to the optical axis of the image device. A shift in this case causes distortion of a measurement image. Fig. 17 shows one example of a gradient controlling mechanism for the flow cell. A dashed line 1701 is a horizontal line, a dashed line 1702 is a vertical line, a dashed line 1703 is the optical line of the camera, and a dashed line 1704 is a line substantially perpendicular to the optical axis. Reference numeral 1710 denotes a base of the apparatus, by which a horizontal support arm 1711 of the flow cell and a measurement position arm 1712 are fixed. The flow cell 1720 has its gradient controlled by a rotation mechanism 1713 such as a motor. Reference numeral 1721 denotes a reagent inlet, reference numeral 1722 denotes a reagent outlet, and reference numeral 1723 denotes the position of the reactor. This figure shows fixation at a horizontal position at the time of insertion of the bead. The bead is inserted into the flow cell, and then inserted into the reactor. When the insertion of the bead is completed, the flow cell pivots about the rotation mechanism to a measurement position. Consequently, the flow cell has a gradient with respect to the horizontal direction. At this time, the flow cell can be fixed at a position substantially perpendicular to the optical axis, since the measurement position arm 1712 determines the upper position of the flow cell. Fig. 19 is a view of the flow cell when viewed from the optical axis side. There are two measurement position arms 1712 on the left and right, respectively, and therebetween is fixed a flow part.

(2) Removal of background luminescence components

Next, background luminescence components are removed (the flow cell is initialized) (see the flowchart of Fig. 4). The technique for analysis of a gene sequence in this example uses bioluminescence. The mechanism of reactions is as shown in Figs. 1 and 2. Pyrophosphate (PPi) generated by an elongation reaction of bases is reacted with AMP under the presence of pyruvate orthophosphate dikinase (PPDK) to produce ATP. At this time, when luciferase as a bioluminescence enzyme and a luciferin as a luminescence substrate coexist, bioluminescence is generated in an amount proportional to the amount of ATP produced. Quantitative detection of the bioluminescence allows determination of occurrence/nonoccurrence of elongation of the base, and the number of elongated bases if elongation has occurred. In this reaction system, ATP existing before the elongation reaction affects as background luminescence. ATP is widely used in normal biological activities, and is therefore easily trapped due to contaminations by bacteria and the like, and a part of ATP sticks to the inside of the cell, and may not be removed by merely flushing a washing liquid. Since the sample normally undergoes an amplification process by a method such as PCR, remaining/trapping of pyrophosphate and the like is also conceivable. Therefore, it is necessary to decompose externally originated ATP components and pyrophosphate components before the start of the elongation reaction. Removal by decomposition may be performed by washing the inside of the flow cell with an aqueous solution containing a catabolic enzyme such as apyrase or pyrophosphatase (PPase). The aqueous solution is stored in a catabolic enzyme aqueous solution tank, and injected by a mechanism similar to a mechanism of selectively injecting 4 nucleic acid substrates. In this example, a washing reagent prepared by including apyrase and pyrophosphatase each at a concentration of 0.1 mU/$\mu$L was used. Pyrosequencing is a method for measuring the amount of ATP present, and the reaction system described in WO 98/13523, namely sulfurirase or the like, can be used as a matter of course. However, the reaction system of PPDK used in this example has lower background luminescence and is thus superior.

(3) Measurement of nucleic acid sequence

Next, a sequence is determined based on the principle of pyrosequencing. First, reagents that are used are, for example, as follows.

[1] reagent A: reagent for bioluminescence + dATP + polymerase (or dATP$\alpha$S instead of dATP)
[2] reagent C: reagent for bioluminescence + dCTP + polymerase
[3] reagent G: reagent for bioluminescence + dGTP + polymerase

[4] reagent T: reagent for bioluminescence + dTTP + polymerase
[5] washing reagent: apyrase 0.1 mU/$\mu$L, pyrophosphatase 0.1 mU/$\mu$L
[6] conditioning reagent: same in components as reagent for bioluminescence

Here, the reagent for bioluminescence is a reagent having luciferase, luciferin, PPDK, PEP and AMP. In addition, some components may be added for stabilization of the chemical reaction, and addition of those components is not limited as long as the reaction system is not hindered.

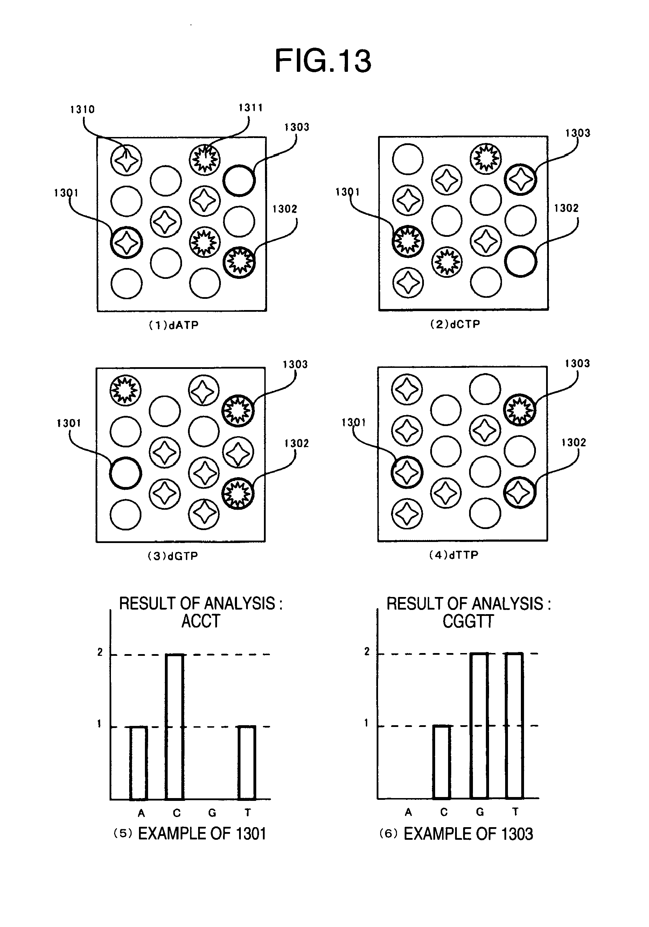

Bioluminescence is detected by repeatedly introducing those reagents in the order of "any of reagents A to T → washing reagent → conditioning reagent → any of reagents A to T" and evaluating the results. Fig. 13 schematically shows an example of analyzing a gene sequence by the apparatus of this example. Now, it will be described focusing on 3 reactors 1301 to 1303. Reference numeral 1310 denotes luminescence at elongation equivalent to one base, and reference numeral 1311 denotes luminescence at elongation equivalent to two bases. Pictures (1) to (4) illustrate luminescent images when introducing reagents A to T, respectively. In the picture (1), luminescence by elongation is observed in reactors 1301 and 1302, and particularly in the reactor 1302, elongation equivalent to two bases occurs. On the other hand, in the reactor 1303, it can be said that elongation has not occurred because no luminescence is observed. From these 4 measurements, the gene sequence of the sample can be obtained as pictures (5) and (6). The temperature of 32 to 40°C is suitable as the temperature of the flow cell at the nucleic acid elongation reaction. Therefore, the flow cell is set to any condition within the above-described temperature range beforehand. In this example, experiments were conducted with the temperature set to 37°C or 40°C.

The amount of bioluminescence is proportional to the number of elongated bases. Therefore, the amount of luminescence in the reactor can be calculated to determine occurrence/nonoccurrence of elongation of bases and the number of elongated bases. Since the reactor shows luminescence originated from one bead, and its position is not changed, gene sequence information of the sample can be obtained in parallel by introducing reaction reagents one by one as described above and integrating the resulting positions of the bioluminescent images and luminescence signal intensities in time sequence. The degree of parallelization in this case is a product of the number of microfabricated reactors in the flow cell and the bead capture rate in the reactor.

For the bead on which a sample is fixed, the sequence of the sample nucleic acid can be analyzed in parallel together with the bead in the manner described above. By using a bead having a high specific gravity, particularly a zirconia bead, processes can be easily automatized starting from insertion of the bead into the microfabricated reactor in the flow cell and ending with analysis by nucleic acid elongation. The bead in the reactor can be stably held in the reactor by its own weight during subsequent injection of the reagent solutions and washing solution. As a result, analysis with easy handling and high accuracy becomes possible without using a configuration of loading with microparticles and a membrane which have been required in the prior art. Further, reagents can be replaced accurately and rapidly. Namely, it is important in pyrosequencing that 4 reagents (A to T), the washing reagent and the like are reliably introduced into the reactor and these reagents are reliably discharged. In this configuration, the reagents described above can be replaced very easily and rapidly because only one bead is captured in the reactor. This considerably contributes to an improvement in throughput of the apparatus and an improvement in accuracy.

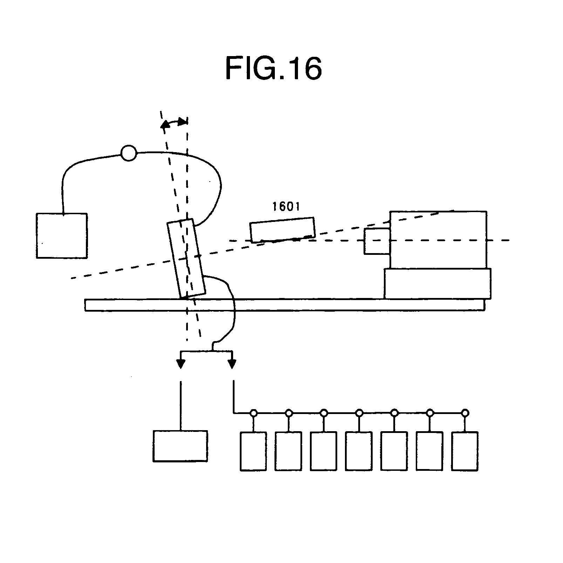

Experiments were conducted with the flow cell having a gradient with respect to the horizontal direction, and specifically, in this example, the gradient between the vertical line (vertical direction) and the flow cell was set to 10 degrees. This is because the bead used in the example was a zirconia bead having a specific gravity of 6, and therefore a gradient of 10 degrees is enough for prevention of discharge from the reactor. If the angle is small, the bead is more likely discharged although air bubbles are smoothly discharged as described previously. If the angle is large, the occurrence rate of the error of retention of air bubbles in the flow cell increases although discharge of the bead can be prevented. It has been found that using a bead having a specific gravity of 6 and setting the angle to 10 degrees as in the present invention is a suitable condition, since discharge of the bead and retention of air bubbles could be prevented at the same time. If the gradient is in the range of 6 to 30 degrees, the effect of preventing discharge of the bead and retention of air bubbles is prominent, but it is also possible to set the gradient to an angle outside the range. By refracting the optical axis of the camera by a reflecting plate 1601 such as a mirror as in Fig. 16, only the angle of the flow cell can be adjusted while the camera is kept horizontal. Since the camera is generally heavy, it is somewhat difficult to make an adjustment so that the vertical line of the flow cell matches the optical line of the camera. However, when a reflection plate is provided at a midpoint as described above, a suitable optical position can be easily established by merely adjusting the angle of the plate.

It should be further understood by those skilled in the art that although the foregoing description has been made on embodiments of the invention, the invention is not limited thereto and various changes and modifications may be made without departing from the spirit of the invention and the scope of the appended claims.

Advantages of the Invention

According to the present invention, analysis throughput and analysis accuracy are improved in analysis of nucleic acids, particularly analysis of gene sequences. Especially, the analysis accuracy can be improved to a level comparable to that of the fluorescence DNA sequencer of the prior art.

**Claims**

1.  A kit comprising:

    a vessel having a plurality of recessed portions on one surface; and
    a plurality of particles having a specific gravity to water of 4.

2.  The kit according to claim 1, wherein the particles include zirconia.

3.  The kit according to claim 1, wherein the plurality of recessed portions are two-dimensionally arranged, and a smallest unit of arranged lattices of the two-dimensional arrangement is a rhombus which is not rectangular.

4.  The kit according to claim 1, wherein the recessed portions are arranged to form a plurality of lines in a long axis direction of the vessel so that a center point on a surface of an opening of the recessed portion of each of a plurality of adjacent lines is not situated on a straight line in a short axis direction substantially orthogonally crossing the long axis direction of the vessel.

5.  The kit according to claim 1, further comprising a plurality of projecting portions on the one surface.

6.  The kit according to claim 3, further comprising a plurality of projecting portions on the one surface, wherein the projecting portions are arranged substantially at a position of a side of the rhombus.

7.  The kit according to claim 3, further comprising a plurality of projecting portions on the one surface, wherein the projecting portions are arranged substantially parallel to the position of the side of the rhombus.

8.  An apparatus comprising:

    a cell including a first member having a plurality of recessed portions, and a second member opposed to the recessed portions of the first member and having an introduction portion and a discharge portion;
    a liquid flow controlling portion introducing from the introduction portion a liquid containing particles and discharging the liquid from the discharge portion; and
    a detection portion carrying out optical detection for the recessed portions;
    wherein the liquid flow controlling portion introduces into the introduction portion a liquid containing the particles having a specific gravity to water of 4.

9.  The apparatus according to claim 8, comprising a cell controlling portion moving the cell to have a gradient with respect to a horizontal direction.

10. The apparatus according to claim 9, wherein the cell controlling portion arranges the cell substantially horizontally when the liquid flow controlling portion introduces into the introduction portion the liquid containing the particles, and arranges the cell to have a gradient with respect to the horizontal direction when the detection portion carries out the optical detection.

11. The apparatus according to claim 8, further comprising a first reagent tank, a second reagent tank, a third reagent tank and a fourth reagent tank for storing 4 nucleic acid substrates, respectively, and an injection portion selectively injecting the 4 nucleic acid substrates into the cell.

12. The apparatus according to claim 8, wherein a diameter and a depth of the recessed portion is 1.2 times or more and 1.5 times or less as large as a size of the particle.

13. The apparatus according to claim 8, wherein the liquid flow controlling portion performs control so that the liquid containing the particles flows in a to-and-fro direction when the liquid containing the particles is introduced into the introduction portion.

14. The apparatus according to claim 8, further comprising a fifth reagent tank storing a solution for decomposing at least one of ATP and pyrophosphate, and an injection portion selectively injecting into the cell the decomposing solution.

15. The apparatus according to claim 8, wherein the liquid flow controlling portion introduces into the introduction portion a liquid containing zirconia particles.

16. The apparatus according to claim 9, wherein the cell controlling portion arranges the cell to have a gradient of 6 to 30 degrees with respect to a vertical direction when the detection portion carries out the optical detection.

17. A system comprising:

a cell comprising a first member having a plurality of recessed portions, and a second member opposed to the recessed portions of the first member and having an introduction portion and a discharge portion;
particles having a specific gravity to water of 4 and stored in the recessed portions;
a liquid flow controlling portion introducing from the introduction portion a liquid containing the particles and discharging the liquid from the discharge portion;
a detection portion carrying out optical detection for the recessed portions; and
a cell controlling portion moving the cell to have a gradient with respect to a horizontal direction.

18. The system according to claim 17, further comprising a particle tank storing the particles.

19. An analysis method using particles, wherein a first liquid containing a plurality of particles having a specific gravity to water of 4 is introduced into a vessel having a plurality of recessed portions on one surface and placed substantially horizontally, and
the particles moving with a flow of the first liquid are stored in the recessed portions.

20. The analysis method using particles according to claim 19, wherein the vessel is moved to a position having a gradient with respect to a horizontal direction after the particles are stored in the recessed portions,
a second liquid containing a reagent for reaction is introduced into the moved vessel, and
optical detection is carried out for the recessed portions.

# FIG.1

# FIG.2

# FIG.3

(a)

(b)

(c)

# FIG.4

```
┌─────────────────────────────────────┐
│      MAKE FLOW CELL HORIZONTAL       │
└─────────────────────────────────────┘
                   ↓
┌─────────────────────────────────────┐
│            INTRODUCE BEAD            │
└─────────────────────────────────────┘
                   ↓
┌─────────────────────────────────────┐
│       BRING ANGLE OF FLOW CELL       │
│        MEASUREMENT POSITION          │
└─────────────────────────────────────┘
                   ↓
┌─────────────────────────────────────┐
│          INITIALIZE FLOW CELL        │
└─────────────────────────────────────┘
                   ↓
┌─────────────────────────────────────┐◄───┐
│ INTRODUCE REACTION REAGENT (SUBSTRATE)│    │
│       AND PERFORM MEASUREMENT        │    │
└─────────────────────────────────────┘    │
                   ↓                        │
┌─────────────────────────────────────┐    │
│           WASH FLOW CELL             │    │
└─────────────────────────────────────┘    │
                   ↓                        │
┌─────────────────────────────────────┐    │
│         CONDITION FLOW CELL          │    │
└─────────────────────────────────────┘    │
                   └────────────────────────┘
```

# FIG.5

(a)

501

(b)

510    511

503    504    502

# FIG.6

601

BEAD
(INITIAL STATE)

BEAD
(AFTER SEDIMENTATION : BEAD
POSITION CORRESPONDING TO
THRESHOLD)

UPPER SURFACE OF PLATE

r

$v_{flow}$

602

r

$d=r$

603

R    R

x

WELL

# FIG.7

# FIG.8

# FIG.9

# FIG.10

## FIG.11

## FIG.12

# FIG.13

(1)dATP

(2)dCTP

(3)dGTP

(4)dTTP

RESULT OF ANALYSIS :
ACCT

RESULT OF ANALYSIS :
CGGTT

(5) EXAMPLE OF 1301

(6) EXAMPLE OF 1303

# FIG.14

# FIG.15

(a)

(b)

# FIG.16

1601

# FIG.17

# FIG.18

# FIG.19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9813523 A
- WO 9828440 A
- WO 01020039 A
- WO 03004690 A
- JP 9234099 A

**Non-patent literature cited in the description**

- *Anal. Chem.,* 2000, vol. 72, 3423-3430
- **MARGULIES M et al.** Genome sequencing in microfabricated high-density picoliter reactors. *Nature,* 15 September 2005, vol. 437, 376-80
- *Electrophoresis,* 2003, vol. 24, 3769-3777